# EUROPEAN PATENT APPLICATION

(11) **EP 4 389 404 A1**
(43) Date of publication of application: **26.06.2024**
(21) Application number: 22383235.3
(22) Date of filing: 19.12.2022
(51) Int. Cl.: B29C 70/54, B29C 70/44, B29C 33/20, B29D 99/00, B64C 3/20, B64C 3/18

(54) **METHOD AND DEVICE FOR MANUFACTURING COMPOSITE WING COVERS**

(71) Applicant: AIRBUS OPERATIONS, S.L.U., 28906 Getafe (Madrid) (ES)
(72) Inventor: GARCÍA MARTIN, Diego, 28906 Getafe (Madrid) (ES); MUÑOZ AJENJO, Fernando, 28906 Getafe (Madrid) (ES); GALERA CÓRDOBA, Georgina, 28906 Getafe (Madrid) (ES); IBISATE GONZALEZ DE MATAUCO, Alexander, 28906 Getafe (Madrid) (ES); ESQUIVIAS GARCIA, Fernando, 28906 Getafe (Madrid) (ES)
(74) Representative: Herrero & Asociados, S.L.

(57) **Abstract**

The method comprises: placing a laminate (1) inside each of a plurality of shaping tools (2); shaping the laminates (1) pressing the laminates (1) against the shaping tools (2); retaining the shaped laminates (1) inside the shaping tools (2); turning over the shaped laminates (1); attaching a skin (8) to the shaped laminates (1); and curing the skin (8) and the shaped laminates (1), heating the shaping tools (2) and creating a vacuum in the shaping tools (2).

The device comprises a plurality of shaping tools (2) for placing a laminate (1) inside each of them; deforming tools (5) for pressing the laminates (1) against the shaping tools (2) for shaping the laminates (1); magnetic means (4, 7) for retaining the shaped laminates (1) inside the shaping tools (2); and the shaping tools (2) comprise heating elements (9) for curing the shaped laminates (1).

## Description

The present invention relates to a method and a device for manufacturing composite wing covers, in particular, to a method for manufacturing composite wing covers comprising stringers and a skin.

### Background of the invention

Aircrafts use composite wing covers, which comprise stringers and a skin.

The stringers are formed to a desired shaped, such as an omega cross-section shape, and the stringers are co-cored onto the skin, such a prepreg skin, which has been previously laminated.

The devices currently known for manufacturing this kind of composite wing covers comprises female tools where laminates are positioned for shaping and forming the stringers.

Once positioned in the female tools, semirigid inflatable mandrels are applied over them onto the inner surface, and then a lay-up operation is performed for positioning the skin on the shaped laminates, i.e., the stringers.

Finally, the stringers and the skin are co-cured using an autoclave.

In practice, it has been seen that the method and device used for manufacturing these composite wing covers is complex and requires an extended time.

### Disclosure of the invention

Therefore, an objective of the present invention is to provide a method and a device for manufacturing composite wing covers which simplify and shorten the lead time for preparing the stringers and ready for a co-curing process compared to the state of the art methods and devices.

With the method and device of the invention said disadvantages are solved, presenting other advantages that will be described below.

The method and device for manufacturing composite wing covers are defined in the corresponding independent claims. The dependent claims include additional features, which are optional.

In particular, the method for manufacturing composite wing covers according to the present invention comprises the following steps:
- placing a laminate inside each of a plurality of shaping tools;
- shaping the laminates pressing the laminates against the shaping tools;
- retaining the shaped laminates inside the shaping tools;
- turning over the shaped laminates;
- attaching a skin to the shaped laminates; and
- curing the skin and the shaped laminates, heating the shaping tools and creating a vacuum in the shaping tools.

Advantageously, the shaped laminates are retained inside the shaping tools by magnetism.

Furthermore, in the curing step, the vacuum is preferably created in the shaping tools closing a vacuum bag around the shaping tools.

According to a preferred embodiment, the heating of the shaping tools is done by heating longitudinally the internal surface of the shaping tools.

The device for manufacturing composite wing covers comprises:
- a plurality of shaping tools for placing a laminate inside each of them;
- deforming tools for pressing the laminates against the shaping tools for shaping the laminates;
- magnetic means for retaining the shaped laminates inside the shaping tools; and
- the shaping tools comprise heating elements for curing the shaped laminates.

Advantageously, the device also comprises a vacuum bag, that is closed around the shaping tools when the shaped laminates are cured.

According to a preferred embodiment, the magnetic means comprises:
- a ferromagnetic element of a mandrel that is placed inside each shaping tool, with each shaped laminate being sandwiched between the mandrel and the shaping tool; and
- a magnet that is placed in correspondence with each shaping tool.

Preferably, the heating elements are longitudinal heating elements that are embedded in each shaping tool.

### Brief description of the drawings

For better understanding of what has been disclosed, some drawings in which, schematically and only by way of a non-limiting example, a practical case of embodiment is shown.
Figure 1 is an elevation section view of a shaping tool of the device according to the present invention, showing the positioning of a laminate in the shaping tool;
Figure 2 is an elevation section view of a shaping tool of the device according to the present invention, showing the deformation of the laminate by deforming tools;
Figure 3 is an elevation section view of a shaping tool of the device according to the present invention, showing the placement of mandrels in the shaping tool once the laminate has been deformed;
Figure 4 is an elevation section view of a shaping tool of the device according to the present invention, showing the turning over of the shaping tool and placing the stringer on a skin;
Figure 5 is an elevation section view of a shaping tool of the device according to the present invention, showing the co-curing of the stringer and the skin; and
Figure 6 is an elevation section view showing the final composite wing cover.

### Description of a preferred embodiment

The method according to the present invention is carried out in the device according to the present invention and comprises the following steps.

In the drawings it must be pointed out that only the formation of one stringer is shown for simplicity reasons. However, the composite wing cover manufactured by the method and device according to the present invention comprises a plurality of stringers and a skin, so that the machine also comprises a plurality of corresponding elements that will be described hereinafter.

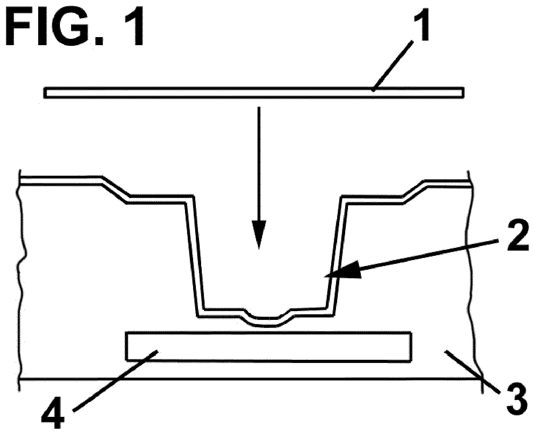

In a first step, shown in Fig. 1, a laminate 1 is placed inside a shaping tool 2 having a cavity with the complementary shape of the string to be obtained, such as an omega shape. This shaping tool 2 is placed on a frame 3 of the device and the frame 3 comprises a magnetic element 4 associated with the shaping tool 2, i.e., placed near the shaping tool 2. The function of the magnetic element 4 will be explained hereinafter.

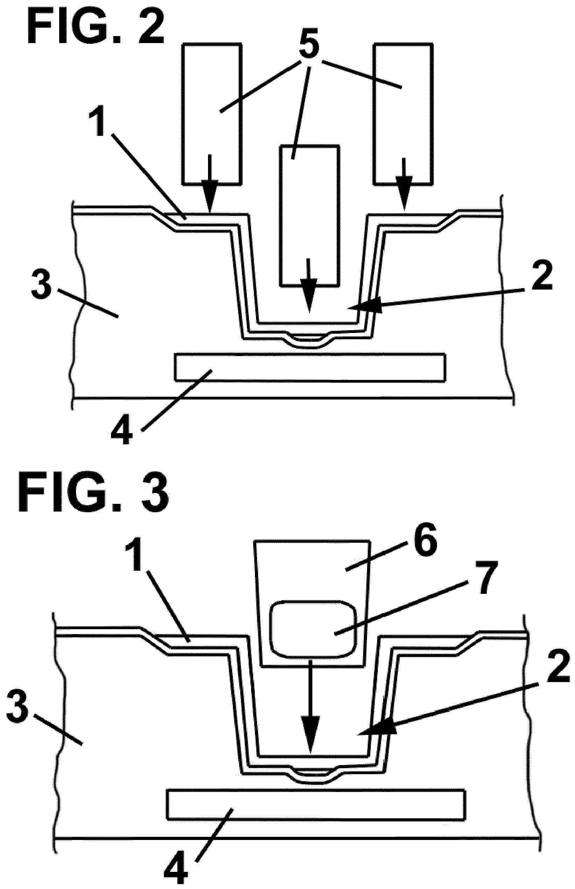

Once placed inside the shaping tool 2, and as shown in Fig. 2, the laminate 1 is shaped by deforming tools 5, which press the laminate 1 against the shaping tool 2, so that the laminate 1 is shaped or deformed to the desired shape, forming the shaped laminate 1 or stringer.

Then, as shown in Fig. 3, a semi-rigid inflatable mandrel 6 is positioned on the hollow formed by the laminate 1 once deformed. The purpose of this semi-rigid inflatable mandrel 6 is to provide inner pressure over the inner surface of the shaped laminate 1 during the curing step, that will be explained later.

Within the semi-rigid inflatable mandrel 6 a ferromagnetic element 7 is included with the objective of providing a magnetic behavior to retain the shaped laminate 1 in place when a turn over is carried out for rotating 180° the shaped laminate 1 by conventional turning means.

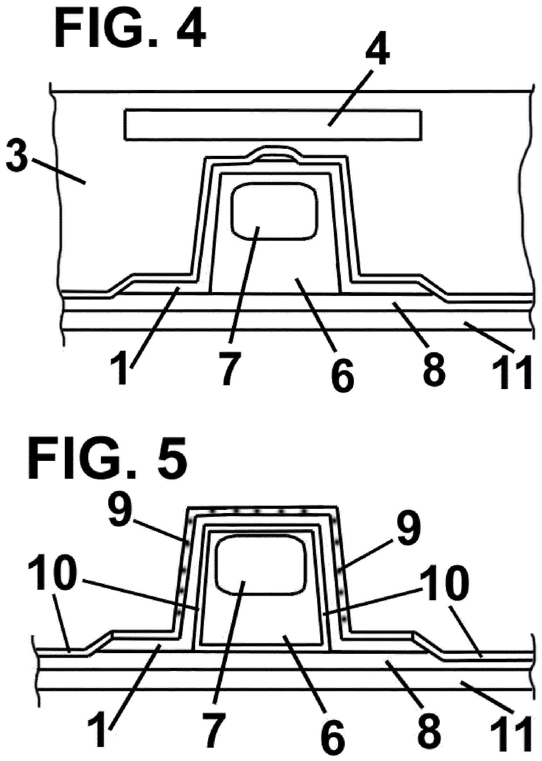

In Fig. 4 the position of the shaping tool 2 and the shaped laminate 1 once rotated 180° is shown. In this position the shaped laminate 1 is attached to a skin 8, such as a prepreg skin previously laminated, and then the frame is released from the shaped laminate 1.

Finally, a curing step is carried out. For this curing step, the shaping tool 2 comprises heating elements 9, such as longitudinal heating elements, e.g., cables, embedded in the shaping tool 2, so that the surface of the shaping tool 2 can be heated during the curing step. This heating elements 9, together with a heating curing tool 11 for the skin, avoid the need of an autoclave for curing the cover, formed by the skin 8 and shaped laminates 1.

Furthermore, the device according to the present invention also comprises a vacuum bag 10 for providing vacuum during the curing step. The vacuum bag 10 is closed around the shaping tool 2, so that the surface to be covered is reduced significantly compared to classical configurations.

This way, only a hyperbaric chamber would be required instead of an autoclave, with ambient temperature instead of a 180° C temperature for an autoclave. Consequently, the energy consumption is reduced significantly.

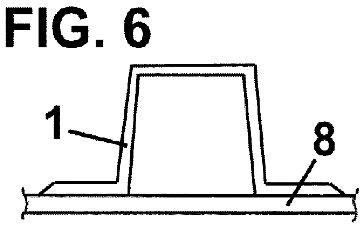

A portion of the final composite wing cover manufactured by the method and device according to the present invention is shown in Fig. 6, comprising a plurality of shaped laminates 1, or stringer, and a skin 8, even though only one stringer is shown in this figure.

Obviously, the number of stringers in the composite wing cover determines the number of shaping tools 2 in the device according to the present invention.

## Claims

1. Method for manufacturing composite wing covers, **characterized in that** it comprises the following steps:
- placing a laminate (1) inside each of a plurality of shaping tools (2);
- shaping the laminates (1) pressing the laminates (1) against the shaping tools (2);
- retaining the shaped laminates (1) inside the shaping tools (2);
- turning over the shaped laminates (1);
- attaching a skin (8) to the shaped laminates (1); and
- curing the skin (8) and the shaped laminates (1), heating the shaping tools (2) and creating a vacuum in the shaping tools (2).

2. Method for manufacturing composite wing covers according to claim 1, wherein the shaped laminates (1) are retained inside the shaping tools (2) by magnetism.

3. Method for manufacturing composite wing covers according to claim 1 or 2, wherein in the curing step, the vacuum is created in the shaping tools (2) closing a vacuum bag (10) around the shaping tools (2).

4. Method for manufacturing composite wing covers according to any one of the previous claims, wherein the heating of the shaping tools (2) is done by heating longitudinally the internal surface of the shaping tools (2).

5. Device for manufacturing composite wing covers, comprising:
- a plurality of shaping tools (2) for placing a laminate (1) inside each of them;
- deforming tools (5) for pressing the laminates (1) against the shaping tools (2) for shaping the laminates (1);
**characterized in that** the device also comprises:
- magnetic means (4, 7) for retaining the shaped laminates (1) inside the shaping tools (2); and
- the shaping tools (2) comprise heating elements (9) for curing the shaped laminates (1).

6. Device for manufacturing composite wing covers according to claim 5, wherein it also comprises a vacuum bag (10), that is closed around the shaping tools (2) when the shaped laminates (1) are cured.

7. Device for manufacturing composite wing covers according to claim 5, wherein the magnetic means comprises:
- a ferromagnetic element (7) of a mandrel (6) that is placed inside each shaping tool (2), with each shaped laminate (1) being sandwiched between the mandrel (6) and the shaping tool (2); and
- a magnet (4) that is placed in correspondence with each shaping tool (2).

8. Device for manufacturing composite wing covers according to claim 5, wherein the heating elements (9) are longitudinal heating elements that are embedded in each shaping tool (2).
